**Europäisches Patentamt**

**European Patent Office**

**Office européen des brevets**

(19)

(11) Veröffentlichungsnummer: **0 013 769**
**B1**

# (12) EUROPÄISCHE PATENTSCHRIFT

(45) Veröffentlichungstag der Patentschrift:
08.09.82

(21) Anmeldenummer: **79200032.5**

(22) Anmeldetag: **19.01.79**

(51) Int. Cl.³: **A 01 C 1/06**

(54) **Verfahren zur Inkrustierung, Pillierung, Granulierung von Saatgut.**

(43) Veröffentlichungstag der Anmeldung:
06.08.80 Patentblatt 80/16

(45) Bekanntmachung des Hinweises auf die Patenterteilung:
08.09.82 Patentblatt 82/36

(84) Benannte Vertragsstaaten:
**BE FR GB NL SE**

(56) Entgegenhaltungen:
**CH-A-552 343**
**DE-A-1 915 942**
**DE-A-2 111 754**
**DE-A-2 158 292**
**DE-A-2 210 330**
**DE-C-921 291**
**DE-C-943 858**
**DE-C-2 135 410**

**Die Akte enthält technische Angaben, die nach dem Eingang der Anmeldung eingereicht wurden und die nicht in dieser Patentschrift enthalten sind.**

(73) Patentinhaber: **Saat- und Erntetechnik GmbH., Strassburgerstrasse 2 Postfach 748, D-3440 Eschwege (DE)**

(72) Erfinder: **Grimm, Hans, Dr., Ringstrasse 11, D-3446 Meinhard 1 (DE)**
Erfinder: **Dabrowski, Ralf, Holiunderweg 1, D-4010 Hilden (DE)**

(74) Vertreter: **Jahn-Held, Wilhelm W., Dr.Dr.-Ing. Dipl.Chem., Schöne Aussicht 8, D-3513 Staufenberg 1 (DE)**

Verfahren zur Inkrustierung, Pillierung, Granulierung von Saat

Es ist bekannt, in der Landwirtschaft, Forstwirtschaft, im Gartenbau sowie im Zierpflanzenbau genutztes Saatgut zu inkrustieren, pillieren, granulieren.

Für diesen Zweck werden anorganische Füllstoffe wie Kaolin, Bentonit, Gesteinsmehle, organische Füllstoffe wie Torf, Holz, Stroh, Mehl, Wasser oder wässrige Salzlösungen, wie mit Gehalt an wasserlöslichen Pflanzennährstoffen, verwendet.

Die deutsche Offenlegungsschrift 19 15 942 schlägt ein umhülltes Saatkorn vor, welches Samenkörner mit Zusatzstoffen dragiert. Es werden gerade nicht quellende Stoffe als «äussere Hüllmasse», sondern spröde Stoffe vorgeschlagen. Dieser Vorschlag aus jüngerer Zeit ist also einen anderen Weg gegangen. Dieser verwendet in der äusseren Hüllmasse keine Stoffe mit weitgehender Plastizität und Durchlässigkeit für Gase und Flüssigkeiten. Es soll vielmehr die Durchlässigkeit durch Aufplatzen der spröden Hülle nach innerer Quellung erreicht werden.

Dieses Verfahren hat die Verwendung eines reversibel quellbaren, grossflächig kristallin ausgebildeten Dreischichtminerals mit von einander gelösten Kristallschichten als neuen Stoff nicht nahegelegt.

Die britische Patentschrift 1 016 385 lehrt das Aufquellen von Vermiculit mit wässrigen Lösungen chemischer Substanzen. Als solche sollen Salze von Alkylammonium-Verbindungen, wie Iso-amylammonium, verwendet werden. An eine solche, z.B. 3-tägige Behandlung soll eine Waschbehandlung angeschlossen werden. Danach soll eine Zerkleinerung auf eine «extreme Feinheit» erfolgen.

Dieser Vorschlag hat den Nachteil, dass teure, komplizierte organische Verbindungen benötigt werden. Diese sind durch Waschwasser zu verdünnen. Solche dünnen Waschwässer dürfen nicht in Wassersysteme abgeleitet werden, da diese das ökologische Gleichgewicht der Natur zerstören. Die Beseitigung oder die Konzentration über eine Eindampfung ist energetisch so aufwendig, dass diese praktisch ebenso entfällt.

Gemäss dieser Druckschrift sollen die tafelförmigen Teilchen des Vermiculits auf eine Dicke von 0,001 bis 0,01 μm zerkleinert werden, wobei der Durchmesser der Teilchen 100–1000 μm beträgt. Es gilt also Dicke zu Durchmesser = 1:100 000.

Das Verfahren zur Herstellung des nach dem erfindungsgemässen Verfahren zu verwendenden neuen Stoffs verwendet zum Aufquellen Wasser und vermeidet das Entstehen dünner Lösungen organischer, zum Teil toxischer Substanzen. Das Verfahren dieser Druckschrift erfordert hohe Vermahlungsenergie.

Die deutsche Offenlegungsschrift 22 10 330 schlägt vor, «Umgebungs-Samenzellen» durch Kompression einer Masse zu Tabletten herzustellen. Die «Zelle» soll aus 2 äusseren Schichten aus teilchenförmigem Material von grosser Partikelgrösse und einer zentralen Polsterungsschicht, Prallschicht genannt, mit kleinerer Partikelgrösse des Materials bestehen. Das die äusseren Schichten bildende Material soll vorzugsweise aus Vermiculit bestehen, das eine laminare Partikelkonfiguration aufweist und das mit beträchtlichen Mengen an nicht laminarem partikelförmigem organischen Material vermischt ist, um eine Schichtenbildung des Vermiculit beim Pressen zu verhindern. Diese «äusseren Schichten» sollen aus einer Mischung aus Torfmoos, Holzcellulose, Vermiculit, anorganischen Nährstoffen, einem Klebe- und einem Gleitmittel bestehen. Der Vermiculit soll sich in der Tablette rasch ausdehnen, «wenn die Tablette in Wasser getaucht wird, wodurch kapillare Durchgänge erzielt weren sollen, durch welche das Wasser aus dem Erdboden zu dem Samen strömt, und das schnell erweicht, so dass es für den Samen leicht durchdringbar wird, wenn letzterer keimt.» Diese Ausführungen bestätigen, dass dieses bekannte Verfahren Vermiculit als Quellmittel verwendet.

Das Verfahren der Erfindung hat diesen Stand der Technik weitergebildet. Dieses verwendet Vermiculit als Basisstoff für einen daraus hergestellten, feinkörnigen, reversibel quellbaren, neuen Stoff mit besonderen Eigenschaften, der für sich oder mit anderen Stoffen in einer Schicht zur Behandlung der Samenkörner verwendet wird.

Das Verfahren der Erfindung hat sich die Aufgabe gestellt, jegliche Art von Saatgut mit jeglicher Oberfläche mit einer besonderen Hüllmasse durch Inkrustierung, Pillierung, oder Granulierung zu behandeln, welche aus einem neuen Stoff mit starker «Klebekraft» besteht, die ausserdem hohe Durchlässigkeit für Gase und Flüssigkeiten aufweist und dadurch für alle Arten von Saatgut gleichmässig gute Wachstumsbedingungen bei unterschiedlichen biologischen Bedingungen schafft.

Das Verfahren der Erfindung ergibt sich aus dem Patentanspruch 1, dessen Lösung im kennzeichnenden Teil definiert ist.

Der Unteranspruch betrifft eine vorteilhafte Weiterentwicklung des Verfahrens der Erfindung.

Ein bevorzugtes Verfahren zur Herstellung des nach dem Verfahren der Erfindung zu verwendenden neuen Stoffes auf Basis des Dreischichtminerals Vermiculit oder Hydroglimmer besteht darin, dass das Ausgangsmaterial mit polaren Flüssigkeiten wie Wasser aufgequollen und durch strukturschonende mechanische Zerkleinerung in extrem dünne, gleichmässig ebene tafelförmige Teilchen übergeführt wird.

Es sind jedoch auch andere Verfahren zur Herstellung dieses neuen Stoffes denkbar. Dieser neue Stoff wird in expandierter Form eingesetzt.

Als Ausgangsstoff für den neuen mineralischen Stoff zur Durchführung des Verfahrens der Erfindung wird Vermiculit sowie Hydroglimmer verwendet.

Vermiculit gehört zu den glimmerartigen Tonmineralen, die ein quellbares Kristallgitter besitzen und deren Kristalle lamellar aufgebaut sind. Es steht der Gruppe der Montmorin-Saponit-Minerale nahe.

Das Mineral gehört zu den Dreischichtsilikaten und hat zwischen den sogenannten Schichtpaketen Wasser eingelagert. Wegen der nicht starr miteinander verbundenen Schichtpakete besitzt Vermiculit ein innerkristallines Quellvermögen. Damit hängt die Fähigkeit zusammen, dass sich Vermiculit-Kristalle beim raschen Erhitzen bis zum etwa 30-fachen ihrer ursprünglichen Dicke in einer Richtung expandieren. Zu dieser Kenntnis der Struktur und der Eigenschaften von Vermiculit wird auf folgende Literatur verwiesen: Hugo Strunz, Mineralogische Tabellen, 5. Auflage, Leipzig 1970, Akademische Verlagsgesellschaft, Geest & Portig KG, Seite 447.

Nach Römpps Chemie-Lexikon, Frankh'sche Verlagshandlung, Stuttgart, 7. Auflage, 1977, Ziffer 3000, weist Vermiculit im Idealfall eine ungefähre Zusammensetzung folgender Formel auf: $Mg_3(Al,Si)_4O_{10}(OH)_2.(H_2O)_4$. Vermiculit enthält zusätzlich erhebliche Mengen an gebundenem Eisen (Fe).

Diese Eigenschaft der Expandierung zeigen auch «Hydroglimmer» sowie «Wechselschicht-(mixed layer-) Minerale. Unter den zuletzt genannten Mineralen sind solche zu verstehen, in denen beispielsweise Vermiculit-Schichten mit Glimmer-Schichten in wechselnder, ungeordneter Folge kristallisieren.

Die Definition des mineralischen Ausgangsstoffes Hydroglimmer ergibt sich aus Salmang-Scholze in «Die physikalischen und chemischen Grundlagen der Keramik», Springer Verlag, New York, 1968.

Das Verfahren der Erfindung verwendet auch den Begriff «äquivalenter Durchmesser» nach dem Lehrbuch von A.G. Kassatkin, Chemische Verfahrenstechnik, Band I, 1962 Seite 54.

Es wird dieser wie folgt definiert:

$$D_{äqu}d2i_v = 2 ab \qquad a + b.$$

Die Werte a und b sind messbare Grössen als Längeneinheiten, wie mm, wobei a und b Länge und Breite der Teilchen bedeuten.

Das Verfahren der Erfindung wird durch Beispiele erläutert.

*Beispiel 1*

Saatgut von Mais mit einem Tausendkorngewicht von 350 g in einer Menge von 100 kg wird mit einer Masse bestehend aus 5 kg Kaolin, aus 2 kg mineralischem Stoff wie er in Anspruch 1 charakterisiert ist, der durch Aufquellen, Expandierung, strukturschonende Zerkleinerung (durch Nassvermahlung) hergestellt worden ist und der über 50 Gewichtsprozent extrem dünne, gleichmässig ebene tafelförmige Teilchen mit einer Dicke von 0,5 bis 10 µm mit Flächenabmessungen entsprechend einem äquivalenten Durchmesser von 20 µm und mit einem Verhältnis Teilchendicke: äquivalentem Durchmesser von etwa 1:10 bis 1:40 enthält, aus 2 kg bekanntem Pflanzenschutzmittel (Fungicid, Insekticid), und aus 10 kg Wasser in einem rotierenden Behälter bei Raumtemperatur etwa 10 min inkrustiert und danach mit Luft von 40° C etwa 30 min ohne Bildung von Schwundrissen getrocknet. Die Massnahmen zur Trocknung ohne Schwundrisse gelten auch für andere Samenschalen, insbesondere mit glatten Oberflächen, auf denen so eine feste Haftung der Schichten auf den Saatkörnern erzeugt wird.

*Beispiel 2*

Saatgut von Zuckerrüben mit einem Tausendkorngewicht von 11 g in einer Menge von 100 kg wird mit 12 kg mineralischem Stoff gemäss Beispiel 1, sowie 1,5 kg Pflanzenschutzmittel (Fungicid, Insekticid); 0,5 kg anorganischem Farbpigment wie Eisenoxydrot und 20 kg Wasser in einem Dragierkessel bei Raumtemperatur etwa 30 min pilliert und danach mit Luft von 50° C ohne Bildung von Schwundrissen 1 h getrocknet.

*Beispiel 3*

Saatgut von Agrostis spez. in einer Menge von 10 kg wird mit 25 kg mineralischem Stoff auf Basis von Hydroglimmer wie er in Anspruch 1 charakterisiert ist, der gemäss Beispiel 1, hergestellt worden ist und der über 60 Gewichtsprozent extrem dünne, gleichmässig ebene tafelförmige Teilchen mit einer Dicke von 1 bis 5 µm mit Flächenabmessungen entsprechend einem mittleren äquivalenten Durchmesser von 40 µm und mit einem Verhältnis Teilchendicke : äquivalentem Durchmesser von etwa 1:10 bis 1:20 enthält, sowie mit 25% Wasser, auf die Menge des mineralischen Stoffes gerechnet, in einem Granulierzylinder mit Austrittslöchern granuliert, danach mit Luft von 30° C ohne Schwundrisse etwa 3 h getrocknet.

Die Massnahmen zur Trocknung ohne Schwundrisse gelten auch für andere Samenschalen, vorzugsweise mit glatten Oberflächen, auf denen so eine feste Haftung der Schichten auf den Saatkörnern erreicht wird.

Das Verfahren der Erfindung mit dem mineralischen Stoff gemäss der Erfindung bietet den technischen Vorteil verkürzter Aufbringzeiten bei schneller und gleichmässiger Verteilung der Behandlungsmasse an den Samenkörnern. Dieser Vorteil besteht besonders auch bei Saatkörnern, die eine ungleichmässige rauhe oder glatte Oberfläche besitzen.

Das behandelte Saatgut wird nach dem Verfahren der Erfindung bei der Inkrustierung und Pillierung vorteilhaft vollständig und gleichmässig umhüllt.

Das Verfahren der Erfindung bietet weiter den Vorteil der raschen Granulierung gegenüber der Arbeitsweise nach dem Stand der Technik. Es werden mit der Granuliermasse gemäss der Zusammensetzung des Verfahrens der Erfindung lange Standzeiten der Löcher des Granulierzylinders unter Schonung des Saatgutes gegen mechanische Beschädigung erreicht.

Das nach dem Verfahren der Erfindung behandelte Saatgut nimmt in kurzer Zeit das für die Keimung erforderliche Quellwasser auf und führt dadurch zu einer gleichmässigen und raschen Keimung.

Ferner bietet das Saatgut nach dem Verfahren der Erfindung nach der Behandlung und Trocknung den Vorteil einer gleichmässigen Rieselfähigkeit beim Ausbringen mit der Sähmaschine.

## Patentansprüche

1. Verfahren zur gas- und flüssigkeitsdurchlässigen Inkrustierung, Pillierung oder Granulierung von Saatgut, bei dem ein aus Vermiculit oder Hydroglimmer als lamellarer Ausgangsstoff erzeugter quellfähiger und kapillare Durchgänge bildender Stoff auf das Saatgut aufgebracht, und das Saatgut getrocknet wird, dadurch gekennzeichnet, dass ein Stoff mit über 50 Gewichtsprozent tafelförmigen Teilchen, die die folgenden Merkmale aufweisen, verwendet wird:

1) Rasche Aufnahme und Abgabe polarer Flüssigkeiten wie Wasser,

2) Dicke der Teilchen von 0,5 bis 10 µm, äquivalentem Durchmesser der Teilchen von 10 bis 200 µm,

3) Verhältnis Teilchendicke: äquivalentem Durchmesser gleich oder kleiner 1:10,

4) hydrophile Eigenschaften an den ebenen Flächen,

5) starke Adhäsions- und Kohäsionskräfte nach Trocknung ihrer wässrigen Masse,

6) Plastizität einer wässrigen Masse, die 35 bis 65 Gewichtsprozent, bezogen auf das Gesamtgewicht, Teilchen enthält,

7) Durchlässigkeit für Gase und Flüssigkeiten bis zu einer Schichtdicke von 5 mm.

2. Verfahren nach Anspruch 1, dadurch gekennzeichnet, dass das behandelte Saatgut rasch getrocknet wird.

## Claims

1. A process for the gas and liquid-permable encrusting, pilling or granulating of seed material through the use of a laminar material of vermiculite of hydrous mica, which is expandable under the effect of a liquid, for coating and drying the seed material, comprising the use of a basic material with over 50% of uniformly even platelets, having the following properties:

1) rapidly absorb or give off polar liquids,

2) a thickness of from 0,5 to 10 microns and surface dimensions corresponding to an diameter of 10 to 200 microns,

3) a particle thickness: equivalent diameter ratio equal to or less than 1:10,

4) hydrophilic properties at their planar surfaces,

5) forming extensively cohesive and adhesive coatings when dried out of a aquous mass,

6) a substantial plasticity of the moist mass of 35 to 65% by weight relative to the total weight of the dry mass,

7) a permeability to gases and liquids at a coating thickness of up to 5 mm.

2. A process according to claim 1, comprising rapidly drying said treated seed material.

## Revendications

1. Procédé d'incrustation, d'enrobage ou de granulation de semence d'une manière perméable aux gaz et aux liquides, suivant lequel on dépose sur la semence et substance, formant des passages capillaires et susceptible de gonfler, obtenue à partir de vermiculite ou de mica hydraté servant de matière première lamellaire, et on sèche la semence, caractérisé en ce qu'il consiste à utiliser une substance ayant plus de 50% en poids de particules tabulaires, qui présentent les caractéristiques suivantes:

1) une absorbtion et un relâchement rapides de liquides polaires, comme l'eau;

2) une épaisseur des particules allant de 0,5 à 10 micron; un diamètre des particules allant de 10 à 200 micron;

3) un rapport épaisseur des particules: diamètre équivalent inférieur ou égal à 1:10;

4) des propriétés hydrophyles sur les faces planes;

5) de grandes forces d'adhérence et de cohésion après séchage de leur masse aqueuse;

6) une plasticité de la masse aqueuse contenant de 35 à 65% en poids de particules rapportés au poids total;

7) une perméabilité aux gaz et aux liquides jusqu'à une épaisseur de couche de 5 mm.

2. Procédé suivant la revendication 1, caractérisé en ce qu'il consiste à sécher rapidement la semence traitée.